# EUROPEAN PATENT APPLICATION

(11) **EP 2 878 923 A1**
(43) Date of publication of application: **03.06.2015**
(21) Application number: 13306626.6
(22) Date of filing: 27.11.2013
(51) Int. Cl.: G01C 21/20, H04W 8/00, H04L 29/08, G06F 17/30, H04W 4/04

(54) **Network-connected objects discovery in indoor environments**

(71) Applicant: ALCATEL LUCENT, 92100 Boulogne-Billancourt (FR)
(72) Inventor: Xu, Wenyi, 91620 Nozay (FR); Chistophe, Benoit, 91620 Nozay (FR)
(74) Representative: Novagraaf Technologies

(57) **Abstract**

A system for network-connected objects discovery within an indoor environment, comprising a search engine (31) configured to provide, in response to a user search request, a location within a search space, this system further comprising
- an information collector module (12) configured for collecting a user-related information;
- a rule engine (14) configured for converting the user-related information to a path criterion for path selection from candidate paths extending from a first location to a second;
- this rule engine (14) being further configured for computing, on the basis of the user-related information, a search space for the search engine (31);
- a path generator (22) configured for selecting, from candidate paths extending from a first location to a second location, a path satisfying the path criterion, the second location being provided by the search engine (31) in the search space computed by the rule engine (14).

## Description

### FIELD OF THE INVENTION

The present invention relates to methods and systems for searching and providing paths to reach a network-connected object within an indoor environment.

### BACKGROUND OF THE INVENTION

By ceaselessly integrating everyday physical objects into the Internet, an exciting and ambitious concept of "Web-of-Things" (WoT) (or Web-of-Objects) is emerging with many new opportunities for end-users. In particular, with the billions of Internet-connected objects, new ad-hoc services spread all over the user environment are appeared.

Nevertheless, the huge number of connected objects to the Internet-of-Things has raised several technical issues, mainly with regards to efficient discovery mechanisms of all these Internet-connected objects. In fact, so as to best satisfy a user request for an object-based service, it is necessarily to search and identify specific objects that closely match a plurality of criteria, some of them related to user's context and profile (e.g. age, eventual handicapped, current location). These criteria are unfortunately unknown a priori to the Internet-of-Things system, as they are generally not mentioned in the Web-of-Things queries.

For instance, a same Web-of-Things request (e.g. looking for a connected TV nearby) expressed by different users (and so with different profiles) could be interpreted in different ways (e.g. an old person willing to get the closest TV from his location while a youth may prefer to walk a bit more to watch a movie on a HD TV).

In particular, with the success of the Web-of-Things in indoor environments where Internet-connected objects are largely present, this problem is further strengthened and conventional solutions to manage a huge number of connected objects reach their limits. Accordingly, more efficient discovery methods and systems for Internet-connected objects discovery within indoor environments are more than ever needed. More specifically, the challenge is to provide, in response to a request over the Internet-of-Things, the most expected Internet-connected object(s) by the requesting user and the most appropriate/suitable path(s) for this requesting user to reach this/these object(s).

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

One object of various embodiments is to provide systems and methods for searching for targeted Internet-connected objects within an indoor environment, while taking into account requester-based criteria.

Another object of various embodiments is to provide methods and systems to best satisfy user requests over the Internet-of-things (with regard to the search context), while there could be billons of objects to filter and more than one response that a priori meet the user request.

Another object of various embodiments is to provide efficient discovery mechanisms of Internet-connected objects in indoor environments allowing to quickly returning accurate and appropriate (with respect to requester profiles) results.

Another object of various embodiments is to provide methods and systems for determining within an indoor environment the most expected Internet-connected object by the requester and for providing the most suitable path for this requester to reach the searched object.

Various embodiments relate to systems for network-connected objects discovery within an indoor environment, these systems comprising a search engine configured to provide, in response to a user search request for a network-connected object in the indoor environment, at least a location within a search space from the indoor environment, these systems further comprising
- an information collector module configured for collecting at least a user-related information;
- a rule engine configured for converting the at least user-related information to at least a path criterion for path selection from candidate paths extending from a first location within the indoor environment to a second location within the indoor environment;
- this rule engine being further configured for computing, on the basis of the user-related information, a search space within the indoor environment for the search engine;
- a path generator configured for selecting, from candidate paths extending from a first location to a second location, at least a path satisfying the said path criterion, the second location being provided by the search engine in the said search space computed by the rule engine.

In accordance with a broad aspect, the above systems further comprise a location model of the indoor environment, this location model describing spatial containment relationships between places lying in the indoor environment.

In accordance with another broad aspect, the computed search space by the rule engine is composed of places (e.g. offices, corridors, labs, conference rooms) described in the location model of the indoor environment.

In accordance with another broad aspect, the user-related information is chosen from the group including the age of the user, the health status of the user, the user preferences, whether the user carries heavy things or not, whether the user is in a hurry or not.

In accordance with another broad aspect, for converting the at least user-related information into at least a path criterion, the rule engine is configured to categorize the user-related information into predefined categories, the search space and the path criterion being determined according to predefined rules associated to the category of the user-related information.

In accordance with another broad aspect, for categorizing the user-related information, the rule engine is configured to apply fuzzy logic to the user-related information.

In accordance with another broad aspect, the rule engine is configured to apply predefined membership functions to attach a degree of truth to each categorization of the user-related information.

In accordance with another broad aspect, the location model comprises a graph of waypoints representing direct accessibility from a first place to a second place of the indoor environment, and the distance between these two places.

In accordance with another broad aspect, the above systems further comprise a positioning module configured to provide the current location in the indoor environment of the requester for the network-connected object, the provided current location of the requester being the said first location.

Further, various embodiments relate to methods for network-connected objects discovery within an indoor environment, these methods comprising a searching step for providing, in response to a user search request for a network-connected object in the indoor environment, at least a location within a search space from the indoor environment, these methods further comprising
- a collection step for collecting at least a user-related information;
- a conversion step for converting the at least user-related information to at least a path criterion for path selection from candidate paths extending from a first location within the indoor environment to a second location within the indoor environment, and for computing, on the basis of the user-related information, a search space within the indoor environment for the searching step;
- a path generation step for selecting, from candidate paths extending from a first location to a second location, at least a path satisfying the said path criterion, the second location being provided by the searching step in the said search space, this search space being computed by the conversion step.

In accordance with a broad aspect, the conversion step includes a categorization of the user-related information into predefined categories, the search space and the path criterion being determined according to predefined rules associated to the category of the user-related information.

In accordance with another broad aspect, the above methods further comprise a collection step of feedbacks about the selected path, these feedbacks being used for adapting the said predefined rules.

In accordance with another broad aspect, for categorizing the user-related information, an application step of fuzzy logic to the user-related information by using predefined membership functions so that attaching a degree of truth to each categorization of this user-related information.

In accordance with another broad aspect, the above methods further comprise a localization step in the indoor environment of the requester for the network-connected object, the location of the requester being the said first location.

Further, various embodiments relate to computer program implemented on a processing unit of a computer, the program including code sections for performing instructions corresponding to the steps of a method according to any of the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

The objects, advantages and other features of various embodiments will become more apparent from the following disclosure and claims. The following non-restrictive description of preferred embodiments is given for the purpose of exemplification only with reference to the accompanying drawing in which
- FiG.1 is a schematic diagram illustrating functional modules of various embodiments for internet-connected object discovery within an indoor environment;
- FiG.2 is a schematic diagram illustrating criteria generation for path selection and for places pre-selection (i.e. search space definition in terms of places of the indoor environment), these criteria to be used for internet-connected object discovery within the indoor environment;
- FiG.3 and FiG.4 are two schematic diagrams, respectively, illustrating a semantic location model of the indoor environment based on ontology and its use for determining a path extending from a first location to a second location, both locations being in the indoor environment;
- FiG.5 is a schematic diagram illustrating waypoints association to places of the indoor environment and the resulting graph thereof;
- FiG.6 is a flow chart illustrating steps to be performed in accordance to the teaching of various embodiments;
- FiG.7 and FiG.8 are two schematic diagrams illustrating membership functions used in various embodiments;
- FiG.9 is a schematic diagram illustrating the general functioning of a rule engine in accordance to the teaching of various embodiments;
- FiG.10 is a schematic diagram illustrating the interaction between different entities for Internet-connected objects discovery within an indoor environment.

### DETAILED DESCRIPTION OF ILLUSTRATIVE EMBODIMENTS

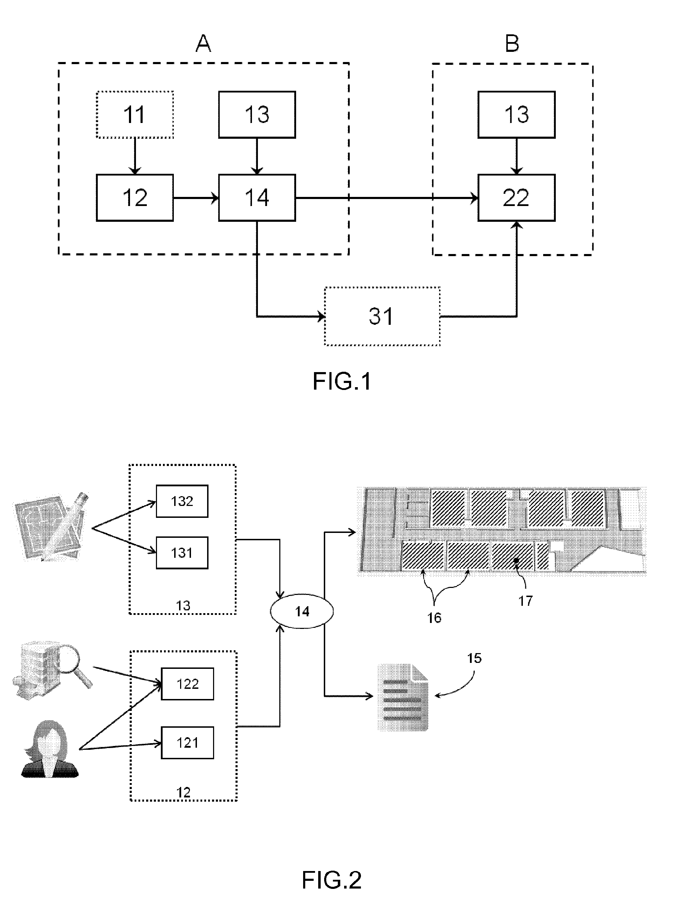

With reference to figure 1, there is shown a rule-based framework for discovering Internet-connected objects which are present in an indoor environment. This rule-based framework for Internet-connected objects discovery utilizes both a spatial representation of the indoor environment and user profile descriptions in order to determine a set of places composing the indoor environment and at least a suitable path, with regard to the user profile, extending from the current user location to a location in this indoor environment comprising an Internet-connected object that the user searches for.

As used herein, the term indoor environment is meant broadly to include any environment at least partially physically delimited such as a residential home, a hotel, a floor in a certain building, an office, a shopping center, a central transport station, a hospital, an airport, a depository, a museum mall or more generally any building. Such indoor environments are generally composed of places (or equivalently spaces) such as room(s), hall(s), corridor(s), or office(s).

As non limitative examples of connected object to the Internet-of-Things from an indoor environment, one can mention a printer, a television set, a display screen, an escalator, a set-top box, a remotely controlled heating device, a remotely controlled refrigerator, or more generally any device equipped with a network interface.

The system of the rule-based framework for Internet-connected objects discovery comprises:
- a first block **A** configured to determine criteria for path selection in the indoor environment, and to compute the search space leading to the pre-selection of a set of places in the indoor environment under consideration;
- a functional search engine 31 configured to search for objects in a computed search space according to expected functionalities (i.e. functional parameters); and
- a second block **B** configured to generate, on the basis of the outputs of the first block **A** and the results returned by the search engine 31, paths from an initial location to targeted location(s) within the indoor environment.

The first block **A** comprises the following modules:
- an information collector module **12** configured to collect user-related information, or more generally any information relating to the search context in which the discovery of Internet-connected objects is to be performed;
- a location model **13** of the indoor environment configured to describe spatial containment relationships between places lying therein (such as coordinates/boundaries of different places and the relation between them);
- a rule engine **14** configured to utilize, according to predefined rules, the content of the information collector module **12** and that of the location model **13** to generate personal path criteria and pre-select places of the indoor environment by computing the search space in which the functional search engine **31** will try to find connected object matching the request of the user;
- a positioning module **11** configured to provide information about the location of a user present in the indoor environment, based on known positioning/localization technologies such as WLAN, Bluetooth, Infrared or RFID.

With reference now to figure 2, the information collector module **12** includes
- a user profile entity **121** for collecting and storing user-related information (i.e. relating to personal information) such as age, health status (e.g. wounded, disabled), name, home/business phone number, current location in the indoor environment of the user given by the positioning module **11,** address, user preferences, agenda, email address, to-do list. These illustrative examples of user-related information are not exhaustive of all the criteria of interest, and notably other ones (as well as their associated rules) may be used alternatively or in combination;
- a context entity **122** for collecting context information such as time, date, accuracy constraints, accessibility of places over time, urgency (time constraints and/or spatial resolution), information regarding the environment (such as, crowded or not, comprise an elevator, the elevator is out-of-service, number of floors, difficulty to access a place because, for instance, of bottleneck or of cellar). In other words, these context information may relate to the indoor environment, as well as to the user (the user situation such as he/she is in a hurry or not, carries heavy things or not).

In some embodiments, the collected information by the information collector module 12 are stored per-user using an XML-like syntax, and intended to be used later for searching and locating Internet-connected objects requested by the user, as well as for providing the suitable path(s) for the user to reach these objects.

In combination or alternatively, the search context information (i.e. including user-related information and context information) may be provided by the user him/herself through a user interface, and/or retrieved by the information collector module **12** from communicating user equipment(s) (such as a personal digital assistant, a smartphone, a personal agenda within a laptop), and/or from communicating systems within the indoor environment (a server indicating if the environment is crowded based on the number of current connections).

The location model **13** comprises
- a semantic location model **131** based on ontology and in which the different places of the indoor environment are described as concepts (e.g. Room, Floor, Stairs). A physical place (e.g. Room_ABC in 2nd Floor) is represented by an instance of the concept Room. This room is further linked to an instance of Floor (e.g. Floor_2). Alternatively, any other kinds of graph (underlying or not an ontology) may be adopted (such as a hierarchical graph based on geographical/spatial containment relationships between places of the indoor environment);
- a graph of waypoints **132** in which each waypoint is a virtual point distributed in one location of a place (e.g. a room, a corridor). Each waypoint represents related coordinates (X,Y,Z). Distances between waypoints (and therefore between different locations of the building) are computed by defining an origin (In this regard, one waypoint is selected with coordinates (0,0,0)) and by using the scale of the building blueprint.

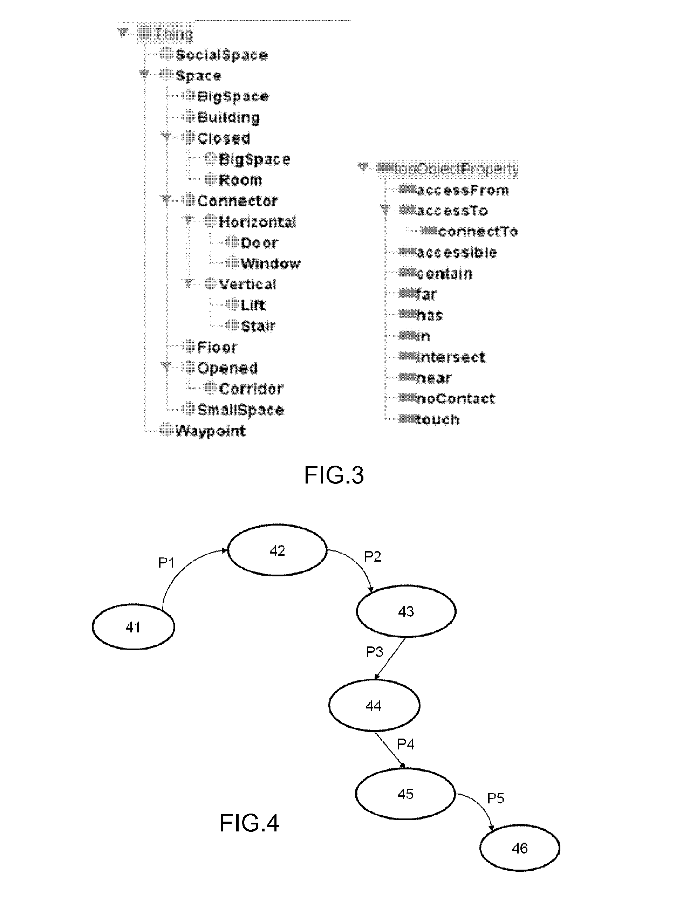

Figure 3 illustrates a semantic location model **131** based on ontology allowing linking two different rooms through a set of Floors, stairs or corridors. As shown in figure 4, the semantic location model is used to find all the possible paths that one has to follow in order to reach a given place. Accordingly, a plurality of properties describing spatial data of a place within the indoor environment is provided (see the right-hand side subfigure of figure 3, such as "is accessible from", "connected to", "contain", "intersect with").

Based on the semantic location model **131,** figure 4 illustrates that for reaching Room **46** from the Room **41,** the user has to follow the path of waypoints composed of Corridor **42,** Corridor **43,** Stair **44,** Corridor **45,** and Room **46.** In other words, the Room **41** connects to (property **P1)** Corridor **42,** this corridor **42** intersects with (property **P2)** Corridor **43** which allows access to (property **P3)** Stair **44,** this Stair **44** connects to (property **P4)** Corridor **45** which allows to access to (property **P5)** the Room **46.**

The graph of waypoints **132** is utilized to obtain indications about the distances to be travelled (e.g. whether it is needed to walk 20 meters or 300 meters to go from Room **41** to Room **46** with the path displayed in Figure 4).

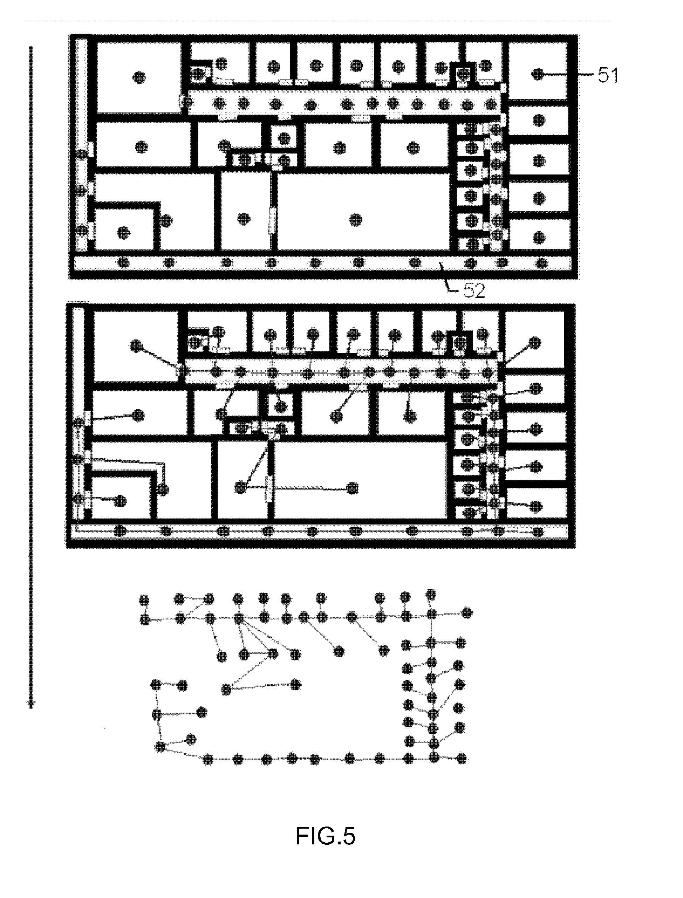

In relation to the graph of waypoints **132** and as it can be seen from the top subfigure of figure 5, the quantity of waypoints associated to any place of the indoor environment (such as a room, a corridor) varies with the size of this place. For example, in a small office, there is one related waypoint associated to this office, which is the center point of the office (e.g. see point **51** in the top subfigure of figure 5) whereas in a long distance corridor, there are several waypoints which are connected to each other (e.g. see the corridor **52** in the top subfigure of figure 5).

The resulting graph of waypoints showing the links between the waypoints, as depicted in the middle and bottom subfigures of figure 5, indicates all the possible links among places or within places as well as the distances between two places. These links represent a direct accessibility from one space to another (e.g. a room is accessible from a corridor through a door). Thus, the paths between two places are also presented in this waypoints graph. The nodes (i.e. waypoints) in the bottom subfigure of figure 5 mean locations in different places of the indoor environment and lines mean movement of user. It is to be noted that a fixed distance between any pairs of waypoints is not required.

Advantageously, the location model **13** storing physical/spatial information of different places and how they are relatively situated from each other (e.g. room_A is nearby room_B, room_A is in floor_2) and containing information allowing calculating distances permits to determine paths that are "accessible" from a user viewpoint. By "accessible" from a user viewpoint, it is meant, for instance, a path not involving stairs for people being in wheelchair and that the user has to follow to get the object that he/she is looking for. Accordingly, in contrary to existing indoor location systems which may return "inaccessible" paths (e.g. requiring to cross walls due to the path computed as a directed line between two spatial points), the location model **13** permits to obtain accessible paths including the various types of places (e.g. room, corridor, stairs, elevators).

Referring back to figure 2, the data gathered by the information collector module **12** (retrieved from the indoor environment and those relating to the user), as well as the content of the location model **13** are shared with (or communicated to) the rule engine **14.**

Based on the search context information (namely, the user-related information and context/environment information) retrieved from the information collector module **13** and on the content of the location model **13,** the engine module **14**
- generates the path criteria **15** (such as, "avoid stairs", "less crowded"); and
- computes the search space for the search engine **31:** pre-selects a set of places **16** (hatched places in figure 2) in the indoor environment. The reference **17** refers to the user location.

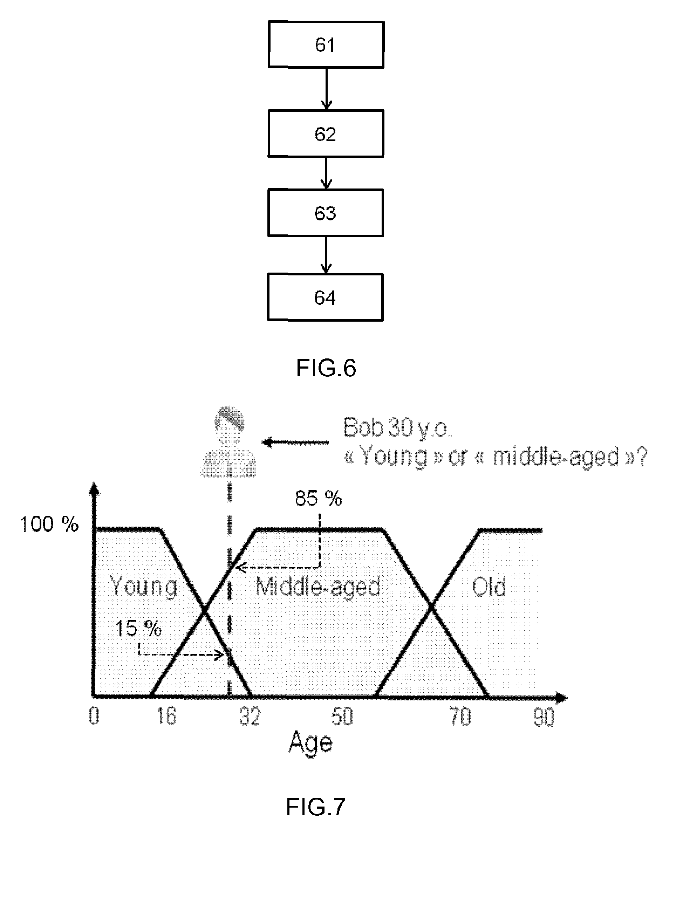

To that end, the rule engine **14** is configured to convert (i.e. transform, translate, map) search context information such as "age" of the requester (retrieved from the user profile entity **121)** to a discriminating feature to select a path (e.g. "select the shortest path", or "path without stairs") from candidate paths extending from a first location to a second location in the indoor environment. In other words, with reference to figure 6, the rule engine **14**
- retrieves the different data collected by the information collector module **12** (step **61** in figure 6);
- associates a category to this/these retrieved data (e.g., it associates the category "young" to the parameter "age = 20 year old", and the category "old" to the parameter "age = 70 year old") (step **62** in figure 6). More generally, the rule engine **14** categorizes the retrieved data into predefined categories;
- generates the path criteria by applying rules to each category having been associated (e.g. if "carry heavy things" and "old" then paths must contain the criterions "without stairs" and "as short as possible") (step **63** in figure 6), these path criteria being intended to be used for selecting path(s) from candidate paths in the indoor environment;
- preselects (step **64** in figure 6) the places that define the search space for the search engine according to the obtained category. For instance, the search space is all the places of the indoor environment which are at least partially included in a circle centered on the user location and of a computed radius depending on the obtained category (for example, a radius of 160 meters for the "young" category, of 30 meters for the "old" category, and of 20 meters for "handicapped" category).

Therefore, the computed search space and the generated path criteria are determined according to predefined rules associated to the category of the user-related information.

The application of rules (step **63)** is based on triggering rules with the categories obtained in the previous step **62.** As illustrative and non-limitative examples of such rules, one can mention the following rules:
- "IF old THEN easy" : if someone is old, then try to find a place easy to access (less stairs, less crowed);
- "IF heavy, THEN near & easy": if someone carries heavy goods, then try to find a near and easily accessible place;
- "IF disabled, THEN easy": if someone is disabled, then try to find a place easily accessible;
- "IF old THEN near": if someone is old, then try to find a place near to access.
- "IF young THEN acceptable": if someone is young, then try to find a place in a distance that sounds acceptable to him.

It is to be noted that the above-described rule engine **14** can be customized with further personal rules. These rules are applied in the third step **63** and can override or replace the above-cited illustrative rules.

In various embodiments, in order to categorize (step **62** in figure 6) a user-related information and more generally a search context information (such as the "age" or a list of disabilities e.g. in wheelchair) into predefined categories (i.e. associate a category to each search context information), the rule engine **14** is based on fuzzy logic theory and uses membership functions (Zadeh L.A., 1965, "Fuzzy sets", Information and Control 8: 338-353, Goguen J.A, 1967, "L-fuzzy sets", Journal of Mathematical Analysis and Applications 18: 145-174). Advantageously, these functions allow associating a degree of truth to the membership of the parameter to a given category (e.g. 80% of chance that a valuation of "25" for the parameter "age in years" belong to the category "young"). Therefore, the use of membership functions to compute a value of truth allows the disclosed systems to manage fuzzy parameters.

Accordingly, so as to associate the appropriate category to a set of collected data relating to a user, the rule engine **14** uses fuzzy logic and, in particular, membership functions in order to attach a degree of truth to each category it computes.

Figure 7 displays an illustrative example of such membership function for the parameter "age". For example, to answer whether a 30 year old person belongs to a "young" or "middle aged" category, the membership function of figure 7 comprising an illustrative three fuzzy sets ("young", "middle aged", and "old") teaches that this person belongs to the "young" category with a probability 15%, to the "middle-aged" category with a probability of 85% and to the old category with a probability of 0%.

The categorization step (step **62** in figure 6) uses different types of membership functions in order to determine a degree of truth. A first type of membership functions is called "General membership functions" or "unconditional membership functions". These membership functions do not depend on other memberships. These functions concern, for instance, the following parameters:
- "age" (determining if the user is young, middle-aged or old); and
- "time" (determining if the request expressed by a user is urgent or not).

A second type of membership functions is "personal membership functions" and comprises membership functions that vary according to the user profile. For instance, the "distance" membership function (determining whether a distance means "near" or "far") depends on the age of the user having expressed the query. As a consequence, for the same distance to travel (e.g. 150 meters), one interpretation can lead to a short distance (if the user is young) or an acceptable one (if the user is old).

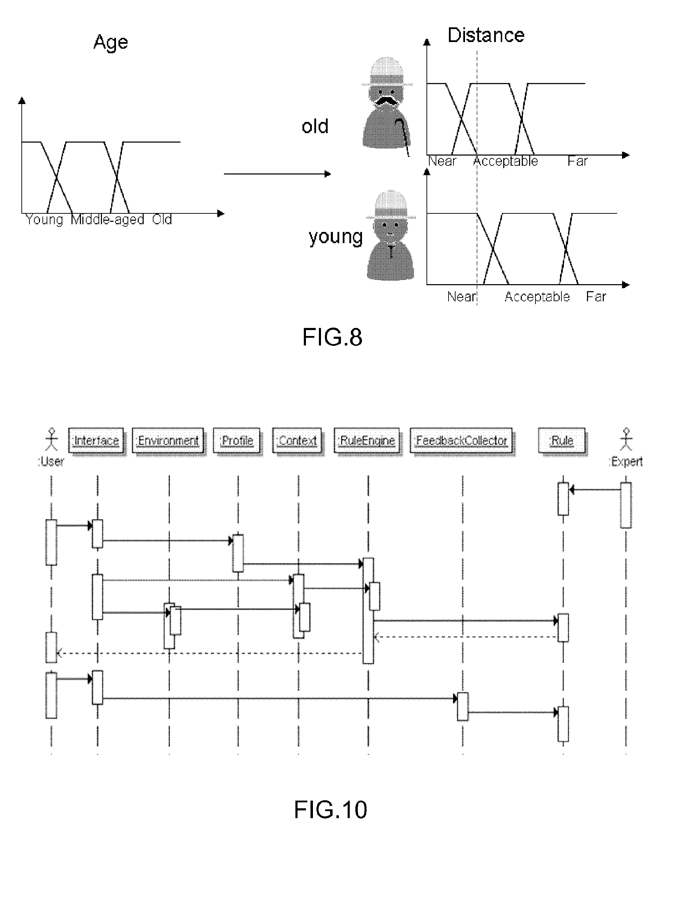

Figure 8 illustrates such "personal membership functions" for estimating whether a distance is far or near, and whether a path is easily accessible or not for the requester based on his/her age.

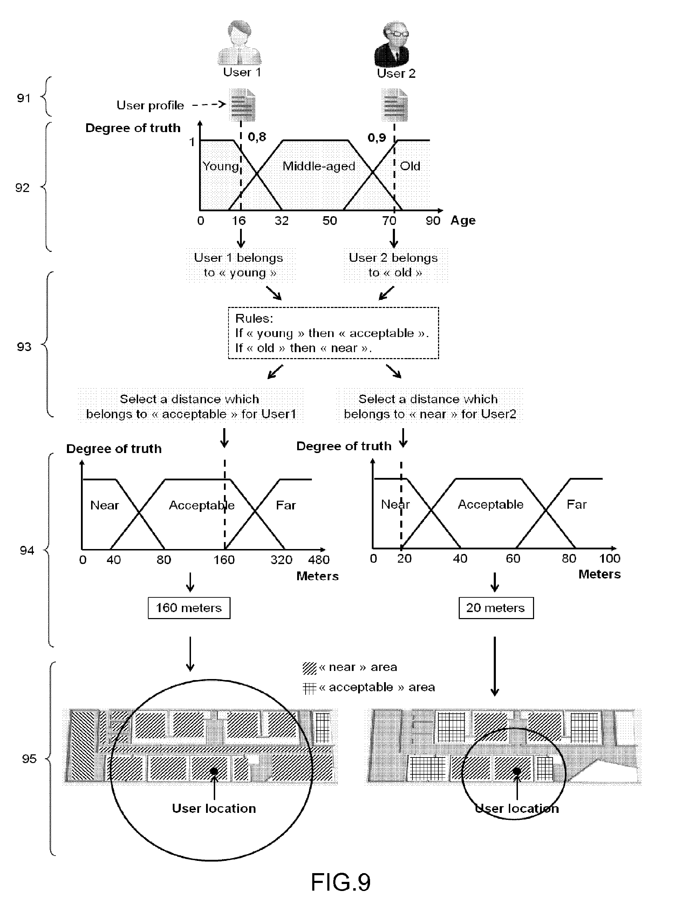

With reference now to figure 9, there is shown an example of how rules work for different profile users. In this illustrative example, two users address the same query to the system (e.g. both are looking for a TV displaying movies with the highest possible quality). Therefore, the discovery framework proceed by
- getting parameters (such as "age") of the users (step **91** in figure 9)
- computing degrees of truth for each parameter (step **92** in figure 9), and therefore determining that the first user is "young" (with a degree of truth equals to 0.8) while the second is "old" (degree of truth equals to 0.9) ;
- applying rules on the category of each user ("young" and "old") (step **93** in figure 9). As the first user is "young" then an "acceptable" distance may be selected. While, for the second user, the rule engine requires that the distance be considered as "near". With the personal membership functions associated to distance, a distance of 160 meters is selected for the "young" user, while a distance of 20 meters is selected for the "old" user. Each of these distances represents the radius of a circle (centered on the user location). All rooms falling within this circle represent the search space used to answer the query;
- based on the distance category, using personal membership functions to determine the radius distance (in meters) from the user location (step **94** in figure 9);
- using the location model **13** to determine the set of places falling into the circle centered on the user location and with the determined radius. This set of places constitutes the search space (step **95** in figure 9).

In response to the user request for an internet-connected object, the search engine **31** provides to the path generator **22** the location(s) of all the Internet- connected objects lying in the search space computed by the rule engine **14** and that meet the user request. Accordingly, a subset of locations of matching objects is found in the computed search space, and subsequently sent to the path generator **22.**

It is worth noting that the functional search engine **31** may be any standard functional search engine configured to search and locate objects according to expected functionalities within a computed search space. A non-limitative example of such standard functional search engine **31** is described in the application numbered FR1054235 (publication number: FR2960663), filed by the present applicant.

The path generator module **21** (diagrammed in the second block B of figure 1) is configured to compute, from the subset of locations returned by the search engine **31,** the best path according to the path criteria generated by the rule engine **14** (e.g., such as obstacles or distance range). This path generator module **22** uses the indoor location model **13**
- to calculate the precise distance of the computed paths, these paths extending from the user location to the returned locations of Internet-connected object(s) by the search engine **31,** and subsequently
- to select from these candidate paths the one(s) best matching the path criteria generated by the rule engine **14.**

In fact, the path generator **22** uses the results generated by the rule engine 31 (the places having been pre-selected) and refined by a call to a standard functional search engine **31** (in each of the places determined as constituting the search space, the connected objects are analyzed). Accordingly, if it remains M places (i.e. there are N objects matching the user request and dispatched in these M places), then M paths are computed. Computing such path may, for instance, rely on using a Dijkstra like algorithm. From these paths having been found, the path generator **22** only keeps in memory those satisfying criterions (e.g. paths without stairs). Assuming that P paths remain, all these paths are presented to the user that can provide feedback about the best path to follow (according to him).

Preferably, the particular user-related information taken into account for computing the search space, and for generating the path criteria is/are indicated to the user.

More generally, the diagram of figure 10 illustrates the functioning of the above-described module in various embodiments of the Internet-connected object discovery system.

In this system, an Expert (the stick figure in the right-hand side of the figure 10) predefines rules in a configuration file, to be used later. An end-user (the stick figure in the left-hand side of the figure 10) provides, through an appropriate interface, information (search context, user-related information). Furthermore, information regarding the indoor environment (context information may relate to the indoor environment) is collected.

When executing, the rule engine reads the rule configuration file made by the Expert as well as information stored in the information collector and in the location model (Profile and context blocks in figure 10). A set of preselected places (with matching objects) are then returned to the user (through the interface). By selecting one of these objects, the user triggers the path generator that computes the most appropriate path.

The end-user can also provide feedbacks about the selected paths (those presented to the user). This feedback is collected by a feedback collector, which may be used by the rule engine in order to refine the results that it will further produce.

Furthermore, the rules are configured to be learned through time so that feedback of users can be analyzed to update (or create new) rules in order to refine future search.

Advantageously, the spatial representation of the indoor environment under consideration (e.g. a building) avoids costly deployment of sensors and transmitters while the rule based framework allows filtering objects based on indoor location model, context and user profiles. Further advantageously, the spatial representation of the indoor environment into consideration limits the search space and returns the location of a connected object based on user needs, user preferences and indoor location information.

Advantageously, by providing a mean to define many filters taking into account environment and user specificities, the above-described embodiments define a powerful way to reduce the search space where connected objects should be searched. As a consequence, the time to find and locate an object that answers to user needs is reduced compared to other approaches.

It is to be noted that references throughout the specification to "Internet-connected" object refer to an object connected to a certain network, whatever it is Internet, Intranet, Extranet, Wireless Local Area Network, or any other form of Network. Thus, the appearance of the "Internet-connected" in various places throughout the specification may be, more generally, replaced by "network-connected".

## Claims

1. A system for network-connected objects discovery within an indoor environment, this system comprising a search engine (31) configured to provide, in response to a user search request for a network-connected object in the indoor environment, at least a location within a search space from the indoor environment, this system further comprising
- an information collector module (12) configured for collecting at least a user-related information;
- a rule engine (14) configured for converting the at least user-related information to at least a path criterion for path selection from candidate paths extending from a first location within the indoor environment to a second location within the indoor environment;
- this rule engine (14) being further configured for computing, on the basis of the user-related information, a search space within the indoor environment for the search engine (31);
- a path generator (22) configured for selecting, from candidate paths extending from a first location to a second location, at least a path satisfying the said path criterion, the second location being provided by the search engine (31) in the said search space computed by the rule engine (14).

2. The system of the preceding claim, further comprising a location model (13) of the indoor environment, this location model (13) describing spatial containment relationships between places lying in the indoor environment.

3. The system of the preceding claim, wherein the computed search space by the rule engine (14) is composed of places described in the location model (13) of the indoor environment.

4. The system of the any of the preceding claims, wherein the user-related information is chosen from the group including the age of the user, the health status of the user, the user preferences, whether the user carries heavy things or not, whether the user is in a hurry or not.

5. The system of any of the preceding claims, wherein, for converting the at least user-related information into at least a path criterion, the rule engine (14) is configured to categorize the user-related information into predefined categories, the search space and the path criterion being determined according to predefined rules associated to the category of the user-related information.

6. The system of any of the preceding claims, wherein, for categorizing the user-related information, the rule engine (14) is configured to apply fuzzy logic to the user-related information.

7. The system of the preceding claim, wherein the rule engine (14) is configured to apply predefined membership functions to attach a degree of truth to each categorization of the user-related information.

8. The system of any of claims 2 to 7, wherein the location model comprises a graph of waypoints representing direct accessibility from a first place to a second place of the indoor environment, and the distance between these two places.

9. The system of any of the preceding claims, further comprising a positioning module (11) configured to provide the current location in the indoor environment of the requester for the network-connected object, the provided current location of the requester being the said first location.

10. A method for network-connected objects discovery within an indoor environment, this method comprising a searching step for providing, in response to a user search request for a network-connected object in the indoor environment, at least a location within a search space from the indoor environment, this method further comprising
- a collection step for collecting at least a user-related information;
- a conversion step for converting the at least user-related information to at least a path criterion for path selection from candidate paths extending from a first location within the indoor environment to a second location within the indoor environment, and for computing, on the basis of the user-related information, a search space within the indoor environment for the searching step;
- a path generation step for selecting, from candidate paths extending from a first location to a second location, at least a path satisfying the said path criterion, the second location being provided by the searching step in the said search space, this search space being computed by the conversion step.

11. The method of the preceding claim, wherein the conversion step includes a categorization of the user-related information into predefined categories, the search space and the path criterion being determined according to predefined rules associated to the category of the user-related information.

12. The method of the preceding claim, further comprising a collection step of feedbacks about the selected path, these feedbacks being used for adapting the said predefined rules.

13. The method of claims 11 or 12, further comprising, for categorizing the user-related information, an application step of fuzzy logic to the user-related information by using predefined membership functions so that attaching a degree of truth to each categorization of this user-related information.

14. The method of any of claims 10 to 13, further comprising a localization step in the indoor environment of the requester for the network-connected object, the location of the requester being the said first location.

15. Computer program implemented on a processing unit of a computer, the program including code sections for performing instructions corresponding to the steps of a method according to any of claims 10 to 14.
